# EUROPEAN PATENT SPECIFICATION

(11) **EP 1 280 418 B1**
(45) Date of publication and mention of the grant of the patent: **26.10.2005**
(21) Application number: 01935132.9
(22) Date of filing: 08.05.2001
(51) Int. Cl.: A23L 1/164, A23L 1/217

(54) **SNACK CHIP HAVING IMPROVED DIP CONTAINMENT AND A GRIP REGION**
SNACK-CHIPS MIT VERBESSERTEM SAUCE-ZURÜCKHALTEN UND MIT EINEM GRIFFTEIL
CHIPS POUR SAUCES APERITIVES AVEC CAPACITE DE RETENTION AMELIOREE ET ZONE DE PREHENSION

(30) Priority: 08.05.2000 US 202465 P
(43) Date of publication of application: 05.02.2003
(73) Proprietor: THE PROCTER & GAMBLE COMPANY, Cincinnati, Ohio 45202 (US)
(72) Inventor: ZIMMERMAN, Stephen, Paul, Wyoming, OH 45215 (US); MISHKIN, Martin, Alfred, Loveland, OH 45140 (US); ROMANACH, Benito, Alberto,, Mason, OH 45040 (US)
(74) Representative: Brooks, Maxim Courtney
(86) International application number: PCT/US2001/014743
(87) International publication number: WO 2001/084955

(56) References cited:
- WO-A-01/56392
- GB-A- 1 321 889
- US-A- 3 410 691
- US-A- 5 009 902

## Description

### FIELD OF THE INVENTION

The present invention relates to snack pieces having an improved dip containment region for providing improved dip holding containment region. More particularly, the present invention relates to snack pieces having an improved dip containment region for providing improved dip holding containment region with a separate grip region that avoids messy finger contact with the dip by a user. Even more particularly, the present invention relates to snack pieces having an improved dip holding containment region with a grip region that avoids messy finger contact with the dip that is readily communicated and discernible to the user by the shape of the snack piece.

### BACKGROUND

Snack chips and snack dip-condiments, such as "chip dips" or "salsas", are a very popular snack combination. However, dip-condiments or fluid portions of such dips used for topical application to snack pieces can create a very messy eating experience for users. Dipping snack pieces can cause messy fingers of the user if the snack piece does not include distinct grip regions that are a distance away from a preferred location for the dip. One of the problems with the many current snack pieces, such as chip-type snack foods, on the market today is that the snack pieces or chips do not hold or contain the dip-condiment after it has been "scooped" onto the chip, especially the fluid portions of the dip. Most snack pieces lack any region on the snack piece surface that can contain any substantial amount of dip-condiment.

A method of making a snack food product having scoop and finger grip portions is described in GB-A-1321889. US-A-500990 and US-A-3410691 relate respectively to cone-skaped taco shells and conical bakery products designed for use with edible fillings.

Randomly formed snack pieces create another problem when using snack pieces for dipping. The problem is that there is little to no uniformity or consistency in the size and shape of these snack pieces, let alone in providing a uniform volume of containment for the dip-condiment or location of such containment on the snack piece. The shapes often have flat surfaces or alternating curved surfaces that promote the ready flow of dipped materials. The size of the snack pieces may be too small to be easily held. Each surface of the snack piece has curvatures such that low viscosity dip-condiments will flow freely. As dip is placed on the snack pieces having no containment region, the dip, or at least the fluid portion of the dip, can flow off of the snack piece's surface, thus causing the user to tilt the chip to try and prevent the dip from flowing off the chip. The tilting of the chip causes the user to hold the chip in awkward positions and is typically not very ergonomic or comfortable. Additionally, when the snack piece is tilted, the fluid portion still can flow readily in more than one direction, i.e., over more than one edge of the snack piece often landing undesirably on clothing or household furnishings. Without a consistent chip shape, the user must pay more attention to the dipping process and less attention to his or her preferred activity. Thus, the randomly formed snack pieces, especially corn and tortilla chips, are not conducive to dipping.

Additionally, the chips that do have some sort of dip containment region are not ergonomically advantageous due to the simultaneous location of the dip containment and gripping regions. In other words, these snack pieces have very little gripping surface area and it is in very close proximity to the preferred containment region of the snack piece. A messy eating experience involving finger contact with the dip inherently follows when the snack piece lacks a gripping region that is distinguishable from the dip containment region. Factors contributing to lower gripping ergonomics are limited sizes that are too small to comfortably hold, integration of the dip holding and grip regions, vertical side walls along the containment region that promote a less natural grip (more awkward grip) and dipping motion, and combinations of all of these features within the same snack piece. Thus, these snack pieces make it more difficult for the consumer to grab and maneuver the chip from dipping to placement in one's mouth. The tradeoff between satisfying the desire for increased dip consumption with good dip containment with any easy to hold snack piece still exists.

Another problem that is experienced is the frustration and messy fingers upon breakage of a chip while engaging a dip. This can happen especially for snack shapes that have a curvature that focuses the forces during engagement of the snack piece with the dip toward a weak point on the snack piece rather than focusing the forces toward the dip. These forces also increase during engagement of the snack piece with the dip if the snack piece has to be tilted considerably to engage the dip and "scoop" it onto the snack piece's surface, i.e., engagement angle. When this engagement angle is large, the vertical height of the resulting shape orientation can also be large. A large height is not able to distribute well the force that a consumer imparts on the snack shape upon engaging a dip and can result in a large torque that eventually can lead to premature breakage of the snack. Increased breakage also can occur when a triangular snack piece is curved about an axis that is parallel to one of the bases or sides of the triangular shape because when a user grabs the snack piece at one of the vertices and engages the dip with the opposite snack piece edge, it focuses the forces at the axis of curvature, which is a weak point in the snack piece design.

One can compensate by making the snacks stronger or thicker, but this can lead to non-preferred textures that could be dense or tooth packing. It would be desirable, therefore, to design snack shapes with engagement angles that provide for comfort while engaging a dip, and that also provide for a proper distribution of the force imparted by the consumer so to prevent breakage even for snacks provided with a thin, light and crispy textures that are preferred by consumers. It will be further preferred that the shapes be consistent among snack pieces sold as a group, to provide for predictability.

For example, there are some extruded corn chips that have sizeable dip containment regions but due to the random formation of these chips the chips typically have either very small or no regions to grip the chip beyond the dip containment well.

Also, these snack pieces are randomly formed and thus irregular and non-uniform sizes and shapes.

Further, a bowl-shaped tortilla chip is available, but again, it has no area for gripping that is beyond the dip containment well. These chips do not allow easy access to the total volume available to retain the dip because the user must use some of this volume to accommodate the user's fingers to grip the chip. If the user maximizes the volume of the containment well available to hold dip, the user must uncomfortably grab the chip on its edge or stick their fingers in the dip contained on the chip. Thus to comfortably grip the chip, the user must sacrifice dip containment volume to accommodate the user's fingers. Additionally, the lack of gripping area can create an unnecessary mess on the consumer's hand or unintentional dropping of the snack piece.

It would be desirable to have a snack piece capable of holding a sizeable amount of dip with an ergonomically comfortable gripping region that was separate from the dip containment region and a method to make such a snack piece. It would be especially desirable if the shape of the snack clearly communicated the preferred gripping location to the user. It would also be desirable if the size and shape of the snack pieces were consistent so as to provide a more constant dipping benefit and enable a nested arrangement of chips yielding an increased packed density. It would be desirable to have a snack piece that would allow the snack piece to be tilted and restrict the flow of dip off of the snack piece. Thus, the snack piece allows the consumer more control over the eating occasion.

### SUMMARY OF THE INVENTION

The present invention relates to a uniform triangular-shaped chip snack piece having a dip containment region for containing a dip-condiment and a grip region separate from the dip containment region.

The snack piece includes a body curved about a first axis, wherein the curvature of the body forms a dip containment region having an open end. The first axis is not parallel to a side of the body, whereby the curved body restricts a dip held on the snack piece from flowing off the snack piece in at least two directions. The snack piece has a shape formed by taking a segment of a three-dimensional source shape, the two-dimensional shape of the snack piece being triangular. The size and shape of the snack piece enables a nested arrangement of a plurality of said snack pieces.

The present invention includes a method of making the snack pieces from a plurality of dough pieces. These dough pieces are formed into a uniform size and shape, wherein each of the pieces has a uniform and consistent dip containment region. The dough pieces are constrained on at least the upper or lower side to hold their uniform and consistent size and shape. While being constrained, the dough pieces are cooked to finished snack pieces.

### BRIEF DESCRIPTION OF THE DRAWINGS

While the specification concludes with claims particularly pointing out and distinctly claiming the present invention, it is believed that the present invention will be better understood from the following description in conjunction with the accompanying Drawing Figures, in which like reference numerals identify like elements, and wherein:
Figure 1 is a perspective view of a preferred embodiment of the snack piece of the present invention;
Figure 2 is a front elevational view of the snack piece shown in Figure 1 looking at its open end;
Figure 3a is a top planar view of the snack piece in Figure 1 showing vertex spans and engagement span for each vertex;
Figure 3b is a top planar view of an alternative embodiment of the snack piece of the present invention showing vertex spans and engagement span for each vertex;
Figure 3c is a top planar view of an alternative embodiment of the snack piece of the present invention showing vertex spans and engagement span for each vertex;
Figure 3d is is a top planar view of a snack piece (not claimed);
Figure 4 is a side elevational of the snack piece shown in Figure 1;
Figure 5 is a perspective view of a snack piece (not claimed);
Figure 6 is a top planar view of the snack piece shown in Figure 5;
Figure 7 is a side elevational view of the snack piece shown in Figure 5;

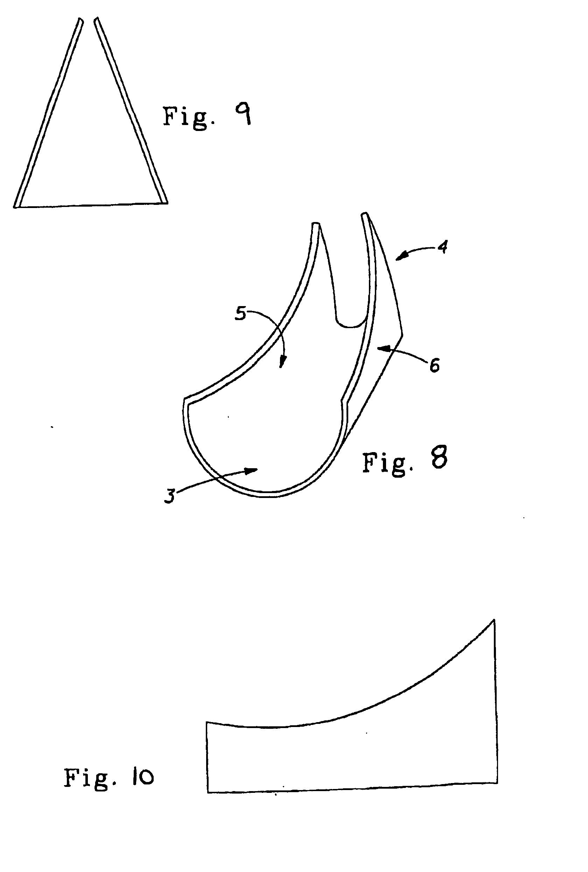

Figure 8 is a perspective view of a snack piece (not claimed);
Figure 9 is a top planar view of the snack piece shown in Figure 8;
Figure 10 is a side elevational view of the snack piece shown in Figure 8;
Figure 11 is a perspective view of a preferred embodiment of a nested arrangement of a plurality of the snack piece shown in Figure 1;
Figure 12 is a perspective view of the preferred embodiment of the package of the present invention;
Figure 13 is a top planar view of the package shown in Figure 12;
Figure 14 is a left side elevational view of the package shown in Figure 12;
Figure 15 is a right side elevational view of the package shown in Figure 12; and
Figure 16 is a bottom planar view of the package shown in Figure 12.

### DETAILED DESCRIPTION

One of the features of the present development is the shaping or curving of a snack piece (10), preferably a farinaceous chip-type snack (referred to as "chip" hereinafter) to improve the holding and containment of a topical dip-condiment on a surface of the snack piece. These topical dip-condiments (hereinafter referred to as "dip") can include, but are not limited to, water or oil based, salsa, dairy based spreads such as cheeses or sour cream, vegetable and or meat containing dips. This is especially important with highly fluid or flowable dips, such as salsa, which can flow at even slight angles of inclination. The snack piece of the present invention can be any type of snack piece, including but not limited to potato chips or crisps, corn or tortilla chips, etc.

Chip shapes that more readily form containment regions are formed herein by taking a segment of a three-dimensional, source shape, including but not limited to cones or cylinders. These three-dimensional source shapes can have any cross sectional shape and are not limited to the more traditional ones, such as circular and elliptical cross-sections. In other words, these cross sections can be non-circular and non-elliptical. This three-dimensional source shape provides the chip with a curvature. The three-dimensional segment that is cut from the source shape is given a triangular two-dimensional shape.

Within the context of the present invention, the two-dimensional shape is that of a three-sided polygon wherein the sides are either straight or which comprise a more curved shaped and are connected with one another at vertices which comprise a sharp angle or which comprise a more rounded configuration. Within the present invention "straight" refers to the distance between the vertices of the polygon rather than the actual curvature or cross-sectional configuration of the side or peripheral edge of the chip. Thus, the side of the polygon forming the peripheral edge of the chip could have some curvature without changing the scope of this invention. Additionally, the two-dimensional shape of the chip assists in communicating to the user a discernable region to grip the snack piece distinct from the preferred containment region (12). For example, the preferred two-dimensional shape has vertices that form grip regions.

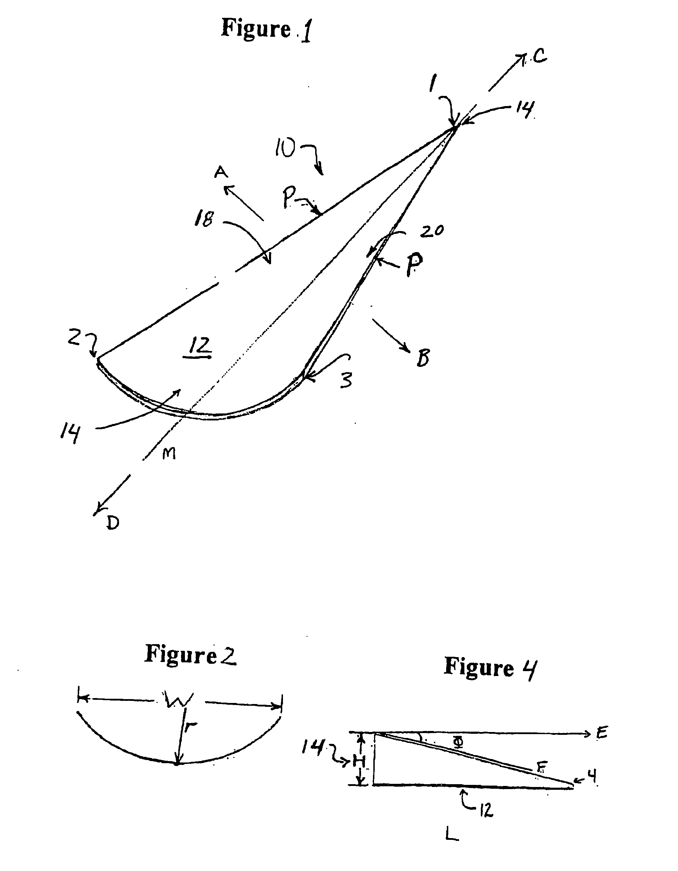

Referring to Figures 1 through 4, in one embodiment, segments of a right or elliptical cylinder are used to form this chip. The range of radius of curvature is from about 5 mm to about 500 mm, preferably from about 10 mm to about 150 mm, more preferably from about 10 mm to about 90 mm, and yet more preferably from about 15 mm to about 65 mm, most preferably from about 45 mm to about 55 mm. Because the chip is formed from a cylinder, the curvature has a radius (r) that is the same all along the length of the chip such as shown in Figure 2. However, if a segment of a cone is used for the source three-dimensional shape, then the radius (r) will vary along the length of the chip.

Still referring to Figures 1 through 4, a preferred embodiment of the snack piece is shown, wherein the chip includes a containment region (12), open ends (14), sides of the containment region (18, 20) and vertices of the chip shape (1, 2, 3). Vertex or vertices, as used herein, is defined as the point opposite to and farthest from the side in any figure having a side: the terminating point (as where the sides of an angle meet or where a curve or surface meets its axis) of some particular lines in a figure or a curve. The side defining the peripheral edge of the chip may have some curvature. When the chip is curved about an axis (M), it creates the open ends (14) and the sides (18, 20), thus forming containment region (12).

Figure 1 shows the chip (10) placed along a horizontal plane with its containment region (12) in an upward facing position. Dip held on the inner surface of the containment region (12) can move in either of four linear directions (A, B, C, D) or any combination of these directions. In the position shown in Figure 1, the chip prevents dip flow in at least two linear directions (A, B) or any combinations of these two directions. When the snack piece is tilted by lifting one of the open ends (14) above the horizontal plane, i.e., greater than 0°, the snack piece shape and curvature restricts or prevents the flow of the dip-condiment in all but one linear direction. Thus, in the example shown in Figure 1, the chip prevents flow in directions (A, B, C).

However, when curving the chip about an axis, the orientation of the axis of curvature must be considered to provide for a better dipping experience because certain orientations of the axis will increase chip breakage when the chip engages the dip due to these engagement forces. The axis of curvature should not be parallel to any side of the polygonal shape of the chip. If the chip is curved about an axis that is parallel to one of these sides of the polygonal shape and the user engages the dip with this side, then the forces are focused substantially perpendicular to this axis, which is a weaker orientation for engagement of the chip.

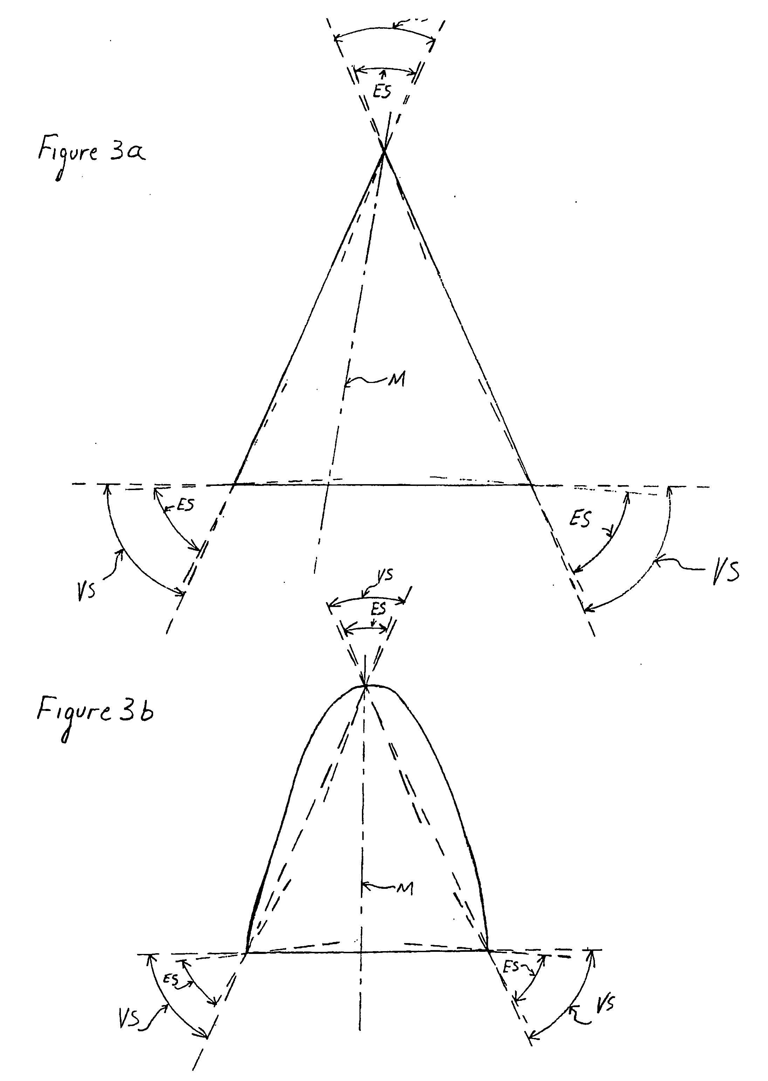

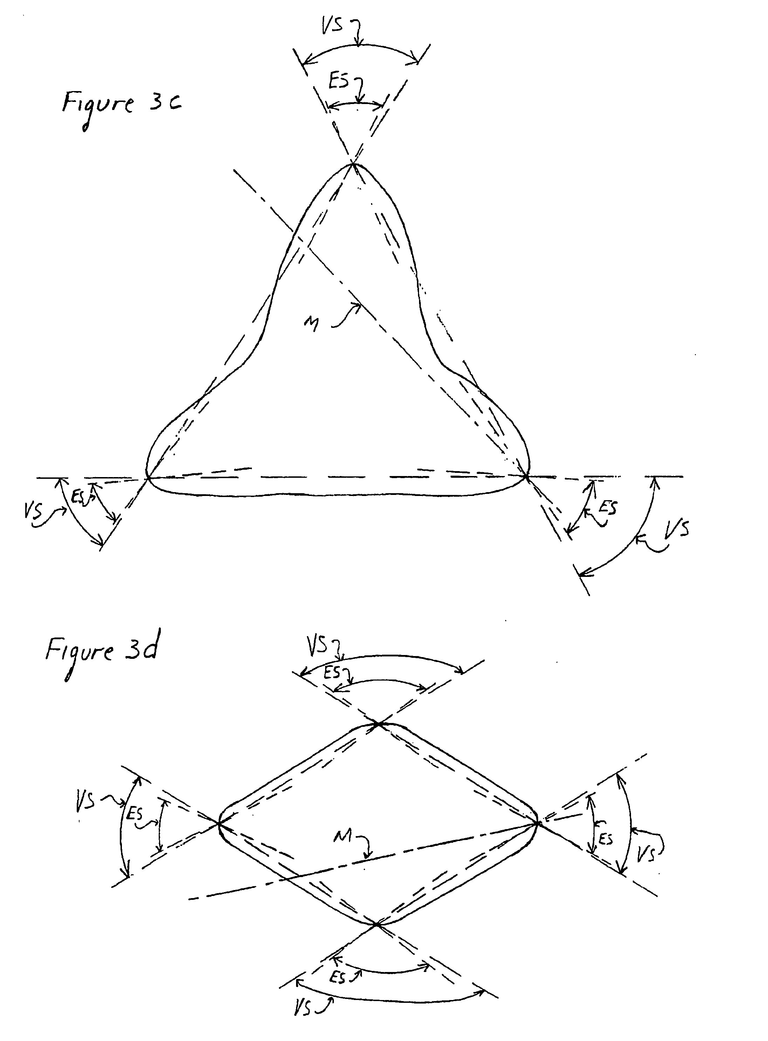

Therefore, as long as the axis of curvature is not parallel to one of the sides of the polygon then the curvature of the chip provides for both dip containment and improved dip engagement strength. However, the axis of curvature will be parallel to an imaginary line that intersects one of the vertices. To determine the optimal orientation of the axis of curvature of the chip, a first straight line is drawn through two of the vertices and extended beyond these vertices. A second line is drawn between a third vertex and one of these vertices to define a vertex span angle (VS) as shown in Figures 3a through 3d. This procedure can be performed for each vertex. This vertex span is dependent upon the shape of the polygon. The engagement span (ES) is about 90% of the vertex span, more preferably about 70%, most preferably 50% as shown in Figures 3a through 3d. In a preferred embodiment, the axis of curvature runs through the middle of the vertex span. In the most preferred embodiment, the axis of curvature is perpendicular to one of the sides of the triangular chip. For example, if the user grabs the chip at vertex (1) and engages the dip with the open end (14), the forces are focused along the axis (M). This design provides a strong chip when exposed to forces due to engagement with the chip because the engagement forces are more likely focused along the axis when the user engages the dip.

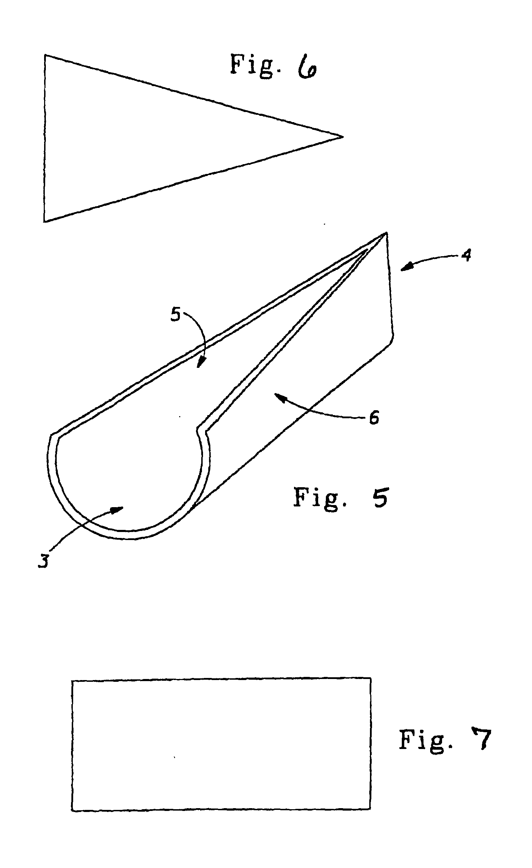

The single curve of the body (10) is such that the sides consistently extend above the lowest region of the snack piece to a sufficient height to prevent dip from spilling over the sides (18) and (20). Referring to Figure 4, due to the triangular shape, the chip has a vertical taper along its side walls (18) and (20) such that they are at a much higher elevation at open end (14) than at the restricted end. This provides additional dip containment benefits and hand held characteristics. For example, the higher walls at open end (14) contain the dip at the preferred dip containment region (12) while the lower height walls at the restricted end provide easier gripping for the user. The angle of vertical tapering (Φ) of the side walls (18) and (20) is defined as the angle formed between a horizontal plane (E) that is tangential to the highest point of the snack piece's side walls (18) and (20) and a plane (F) that is substantially parallel to the sides (18) and (20) of the snack piece when the bottom of the snack piece is resting stably on a solid fixed surface that is parallel to the horizontal plane. The snack piece sides could be curved, irregular shaped or non-linear without changing the object of the invention. The degree of vertical taper (Φ) should be between about 0° to about 45°, preferably between about 4° to about 30°, more preferably between about 6° to about 25°, much more preferably between about 7° to about 20°, and most preferably between about 9° to about 18°. The snack piece achieves the vertical tapering when the body of the snack piece is curved around axis (M).

A width (W) across the open end (14) of the snack piece is from 15 mm to 75 mm, preferably from 20 mm to 65 mm, more preferably from 25 mm to 60 mm, much more preferably from 25 mm to 55mm, and most preferably from 30 mm to 50mm. For a chip made from segment of a cone, the width (w) of the more narrow open end (14) should be less than 75% the width of the open end (14), preferably less than 50% the width of the open end (14), more preferably less than 25% the width of the open end (14), much more preferably less than 10% the width of the open end (14), and most preferably about 0% the width of the open end (14). The ability to hold the tapered snack piece comfortably by hand is a characteristic important to good dipping performance. The length (L) of the snack piece should be from 30 mm to 110 mm, preferably from 50 mm to 90 mm, more preferably from 55 mm to 70 mm, and most preferably from 55 mm to 65 mm.

The weight of the snack piece is preferably from about 1 gram to about 6 grams, more preferably from about 1.5 grams to about 5 grams, mush more preferably from about 2 grams to about 4 grams, and most preferably from about 2 grams to about 3 grams. Also, the snack piece's design permits a very large weight amount of dip to be loaded on the snack piece per gram of snack piece when in a non-tilted, horizontal orientation without spilling the dip.

An ideal method for forming the desired snack piece shapes is by frying or baking in a restrained manner. Dough pieces are formed into a predetermined size and shape. The snack pieces of the current invention can be formed into a fixed, constant shape by cooking the dough pieces between a pair of constrained molds that hold the dough in its shape until the structure is set. Preferably the snack pieces are prepared by a continuous frying method and are constrained during frying. An apparatus described in US-A-3,626,466 can be used. The shape of the constrained molds can be modified to deliver the desired shapes of the present development. The dough pieces are first shaped on a movable apertured mold half then held during subsequent cooking by a second apertured mold half. The dough can be baked such as in a convection oven or fried to set the final structure to the desired shape. The shaped constrained pieces are passed through reservoir containing a hot frying medium or through a hot gaseous medium such as heated air until the pieces are cooked to a crisp state with a final moisture content of about 0.5 to about 4% water.

Alternately, the dough could be first cut into the desired shape then constrained by a pair of intermeshing belts wherein the dough piece sits between the belts and takes the shape of the belt contours. Ideally the continuous belts have similar surface contours or shapes in geometrically similar locations such that the belts can come together at close tolerance to hold the dough piece in place. Another variation of the latter process is to have a single belt where the top of the dough piece rests against the bottom of the belt and the bottom of the dough piece either floats by buoyancy to remain in a fixed location or is preferably supported by the convective currents of frying oil directed towards it. The constraining materials for the molds or belts are ideally perforated to allow evaporated moisture from the dough to escape to the frying oil thus maintaining a driving force for mass transfer to continue. The shape of the restrained cooking molds or belts are preferably sections of a sphere, paraboloid or ellipsoid. Once the dough is restrained by the belt(s), the shaped constrained pieces can be either passed through reservoir containing a hot frying medium or through a hot gaseous medium such as heated air. The dough pieces are cooked until the pieces are cooked to a crisp state with final moisture content of about 0.5 to about 4% water.

### Motion Control

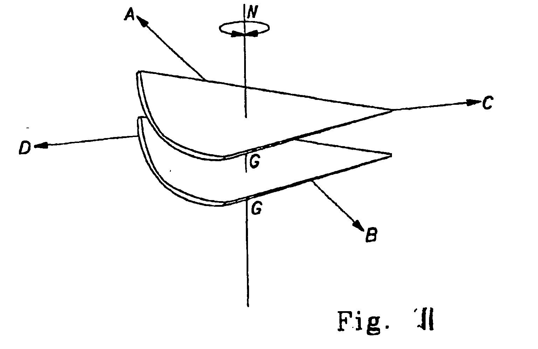

Referring to Figure 11, in the preferred embodiment, a plurality of snack pieces is placed in a nested arrangement. The term "nested arrangement", as used herein, is defined as snack pieces aligned along a single nesting axis (N) that runs at a consistent angle versus face of each snack piece, through the face of each snack piece wherein the snack pieces are preferably all facing the same direction, and so that the pieces can fit within one another. Preferably, the cross sectional footprint at any point across the nested snack piece arrangement essentially matches the cross sectional footprint of an individual snack piece such that geometrically similar locations of adjacent snack pieces are positioned essentially along the same line that runs at a consistent angle versus the face of each snack at the given geometrically similar locations, through the faces of the snack pieces. Generally this line would be parallel to the nesting axis (N), or have a shape that conforms or follows the lead or contour of the nesting axis (N). The nested arrangement has a volumetric bulk density defined herein as the net weight of the nested arrangement of snack pieces per the absolute volume of the nested arrangement of snack pieces. Absolute volume, as used herein, is defined as the three dimensional space occupied which can be calculated, in the case of a nested arrangement with a straight linear axis, by the largest cross sectional footprint of the nested arrangement perpendicular to the nesting axis multiplied by the height of the nested arrangement. The two-dimensional cross sectional footprint forms a projected area that can be determined either by area calculations of a known geometry, a curve integrator, super imposing the actual drawn area on grid paper with predetermined area markings, or by comparing the weight of a piece of paper cut to the footprint outline to a weight of similar paper with a known area. The height of the nested arrangement is measured as the maximum distance between the first and last snack piece in the arrangement, preferably when the arrangement is oriented vertically to minimize spacing between the snack pieces. The volume for other arrangements where the nesting axis is not a straight line can be calculated by integration of a repeating unit, representative of the characteristic cross sectional volume of the resulting arrangement, along the length of the nesting axis.

The nesting axis preferably follows the contour of a straight line, but could follow the contour of an arc, circle, oval, helix or any combination thereof without changing the object of the invention. These constraints increase the bulk density of the nested arrangement and enable motion control. Preferably the snack pieces are of nominally the same size and shape and the nesting axis run perpendicularly through a geometrically similar location of each snack piece in the nested arrangement which will further increase the bulk density of the nested arrangement.

Another aspect of motion control is the relationship between the snack piece and package shape where the size and shape of the package can be used to limit linear and rotational movement. The ratio between the projected area of the snack piece divided by the maximum cross sectional area, that is perpendicular to the nesting axis, of the package interior opening should be greater than about 0.50, preferably greater than about 0.65, more preferably greater than about 0.75, much more preferably greater than about 0.80, and most preferably greater than about 0.85. Preferably the package shape is contoured to match the projected shape of the snack piece. A preferred embodiment of the current development is a triangular shaped chip packaged in a triangular shaped package. In a preferred embodiment the package is a can.

The interior height of the package relative to the height of a nested arrangement of snack pieces has a strong impact towards controlling motion of the snack pieces in all directions. The open space beyond the nested arrangement can allow the first pieces in the arrangement the opportunity to move, turn, and potentially become de-nested due to impact forces experienced by the package. To limit the motion of the chips in a direction parallel to the nesting axis the amount of space between first or last snack piece and the ends of the package while the chips are in a nested arrangement should be less than about 25% than minimum dimension of the snack piece, preferably less than about 100%, more preferably less than about 83%, and most preferably less than about 53%. Preferably the snack pieces are packed in a package with a cross sectional shape matching the shape of the projected area of the snack piece to provide more motion control resistance in the direction parallel to the nesting axis and the amount of space between first or last snack piece and the ends of the package while the chips are in a nested arrangement should be less than about 150% than minimum dimension of the snack piece, preferably less than about 110%, more preferably less than about 100%, much more preferably less than about 85% and most preferably less than about 53%.

### Consistency of Packaged Snacks.

The coefficient of variation ("CV ") around each physical attribute of the remaining whole, non-broken snack pieces within a given package is an excellent method of characterizing the product consistency. The coefficient of variation or % CV is defined as the standard deviation about a product measurement divided by the mean of the measurement taken over a sample size of 100 to 200 individual snack pieces multiplied by 100%. The % CV for snack piece length at the longest distance across the snack piece should be less than 7%, preferably less than 6%, more preferably less than 5%, and much more preferably less than 4%, and most preferably less than 2%. The % CV for snack piece width at the widest point of the snack piece is preferably less than about 16%, more preferably less than about 10%, much more preferably less than about 5% and most preferably less than about 2%.

The % CV for snack piece weight is preferably less than about 17%, more preferably less than about 15%, much more preferably less than about 10%, especially much more preferably less than about 8%, and most preferably less than about 6%. The % CV for the snack piece projected area is preferably less than about 17%, preferably less than 15%, more preferably less than 12%, much more preferably less than 10%, and most preferably less than 8%.

Included in the present invention is a method of making a snack piece, preferably a tortilla chip, having a dip containment region (8). This method includes forming uniform snack pieces into the desired shapes and cooking them as shown and described herein, wherein the shape includes a dip containment region (8). This is preferably completed first. In a preferred method, the snack pieces are next treated with any type of preferred seasonings, flavored liquids or oils. The snack pieces are oriented in a nested arrangement of high bulk density, preferably a vertical stack. This nested arrangement preferably has bulk densities as shown and described herein. This step is preferably completed after the treating step. This nested arrangement is then placed into a container having a semi-rigid or rigid sidewall. Preferably the container has one continuous sidewall and more preferably is manufactured from plastic. In the most preferred embodiment the container is a multiple layer plastic container as set forth below. The containers are preferably then packaged into cartons and the cartons are then preferably stacked to onto a pallet.

### Package

The nested snack pieces can be packaged in a variety of packages including but not limited to canisters, trays, bags, cartons, flow wrap, sleeves, and tubs. The packaging can be oriented or displayed in either a horizontal or vertical presentation. Packaging materials can be selected from a variety of known materials including but not limited to fiber composite material, plastic materials as set forth herein, such as polyethylene (PE), polypropylene (PP), polyethylene terephthalate (PET), preferably high density polyethylene (HDPE), polypropylene or any combination thereof. Such plastic packages may be multiple layer high barrier laminate structures. Packaging materials preferably provide increased shelf stability by limiting the transfer of oxygen and moisture to the product.

Plastic snack packaging offers shape flexibility, fewer components, increased product protection and the opportunity to be lower in cost. One embodiments of the package is a mono-layer or multi-layer plastic semi-rigid, preferably rigid wall, container including a nested arrangement of snack pieces, including but not limited to single curved or compound curved potato chips or crisps, corn-based snack pieces, tortilla chips, etc.

This container can be any shape or size, including but not limited to cylindrical, triangular, polygonal, etc., having a cross section of any shape and size, including but not limited to circular, oval, triangular, square, rectangular, polygonal or any other shape. As set forth above, when the cross sectional shape and size of the package substantially matches the cross sectional shape and size of the snack piece, it provides motion control of the snack pieces contained within the package and reduced package volume. The reduced package volume translates into higher package bulk density, i.e., more net weight of product per volume of package. This provides greater distribution efficiency, store shelf space efficiency, consumer shelf space efficiency and portability. Because the package is manufactured from plastic, the package itself can be formed into non-traditional shapes. Such shapes can be formed to communicate the shape or type of product contained within the package.

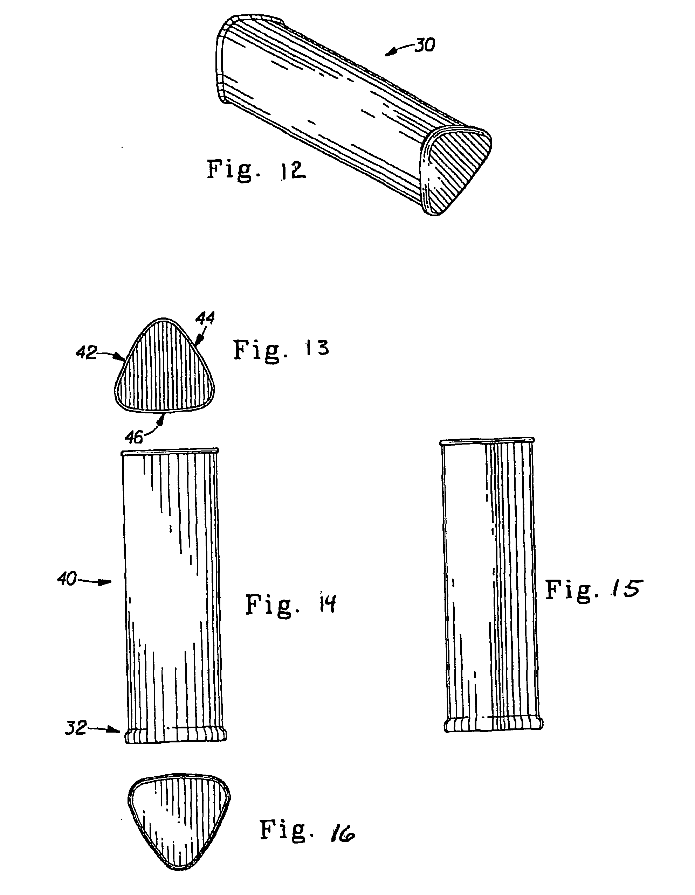

The Package size can vary greatly but is preferably in the range from about 0.15 to 2.96 l (5 to 100 fluid ounces), more preferably 0.15 to 1.48 l (5 to 50 fluid ounces). The package's dimensions will and can vary greatly depending upon the desired package size/portion and the shape of the snack pieces. In a preferred embodiment, the package is shaped to substantially match the shape of the snack piece contained within the package, such as a triangular can holding a nested arrangement of similarly shaped triangular snack pieces. In the preferred embodiment as shown in Figures 12 through 16, the canister package is about 1.33 l (45 fluid ounces) and has a can height of about 24.1cm (9.5 inches). The can (30) has a base area (32) having a height of about 2.54 cm (1 inch) and the length of each triangle leg (34), (36) and (38) in this area is about 8.13 cm (3.2 inches). The body area (40) of the triangle can has a height of about 21.6 cm (8.5 inches) and the length of each triangle leg (42), (44) and (46) in this area is about 7.11 cm (2.8 inches). Further, for the purposes of collating two or more cans for sale as a dual or multi-pack, one can flow wrap two cans inside a plastic bag, mold two cans together, use a single overcap to hold two or more cans, use a tray-like holding device or use a cardboard or plastic sleeve.

## Claims

1. A uniform triangular-shaped chip snack piece having a dip containment region for containing a dip-condiment and a grip region separate from the dip containment region said snack piece having a size and shape enabling a nested arrangement of a plurality of said snack pieces aligned along a single nesting axis that runs at a consistent angle versus face of each snack piece, said ship having a shape formed by taking a segment of a three-dimensioned source shape, the two dimensional shape of the chip being triangular, said snack piece comprising : a body curved about a first axis, said curvature of said body forming a dip containment region having an open end and wherein said first axis is not parallel to a side of said body, whereby said curved body restricts a dip held on said snack piece from flowing off said snack piece in at least two directions.

2. A snack piece according to claim 1, wherein said first axis is perpendicular to said open end.

3. A snack piece according to claim 1, wherein said snack piece has a length (L) from 30 mm to 110 mm.

4. A snack piece according to claim 1, wherein said curvature of said snack piece has a varying radius of curvature along the length of said snack piece.

5. A snack piece according to claim 1, wherein said snack piece is placed in a nested arrangement with a plurality of said snack piece.

6. A snack piece according to claim 1, wherein said open end has a width from 15 mm to 75 mm and said restricted end is less than 75% of the width of said open end.

7. A method for making a snack piece according to claim 1 from dough pieces, said method comprising the steps of:
a) forming said dough piece into a uniform size, curvature and shape;
b) restraining said dough piece on at least one side of said dough piece to hold said dough piece's curvature; and
c) cooking said dough piece to finished snack piece.

8. A method according to claim 7, wherein said dough piece is restrained by placing said dough piece onto a curved belt, wherein said belt having a radius of curvature substantially equivalent to a desired radius of curvature of said snack piece.

## Patentansprüche

1. Ein einheitliches dreieckig geformtes Chip-Snackstück mit einem Soßenfassbereich zum Fassen einer Soße und einem von dem Soßenfassbereich getrennten Festhaltebereich, wobei das Snackstück eine Größe und eine Form aufweist, die eine verschachtelte Anordnung einer Mehrzahl dieser Snackstücke ermöglicht, welche entlang einer einzigen Verschachtelungsachse ausgerichtet sind, die in einem gleich bleibenden Winkel zur Oberfläche jedes Snackstücks verläuft, wobei der Chip eine Form aufweist, die durch Ausnehmen eines Segments aus einer dreidimensionalen Ursprungsform ausgebildet ist, wobei die zweidimensionale Form des Chips dreieckig, wobei das Snackstück einen Körper umfasst, der um eine erste Achse gerundet ist, wobei die Rundung des Körpers einen Soßenfassbereich mit einem offenen Ende ausbildet und wobei die erste Achse nicht parallel zu einer Seite des Körpers ist, wobei der gerundete Körper eine Soße, die auf dem Snackstück gehalten wird, in wenigstens zwei Richtungen daran hindert, von dem Snackstück herunterzufließen.

2. Snackstück gemäß Anspruch 1, wobei die erste Achse lotrecht zum offenen Ende ist.

3. Snackstück gemäß Anspruch 1, wobei das Snackstück eine Länge (L) von 30 mm bis 110 mm aufweist.

4. Snackstück gemäß Anspruch 1, wobei die Rundung des Snackstücks einen veränderlichen Rundungsradius entlang der Längsrichtung des Snackstücks aufweist.

5. Snackstück gemäß Anspruch 1, wobei das Snackstück in einer verschachtelten Anordnung mit einer Mehrzahl von Snackstücken angebracht ist.

6. Snackstück gemäß Anspruch 1, wobei das offene Ende eine Breite von 15 mm bis 75 mm aufweist und das verengte Ende weniger als 75 % der Breite des offenen Endes ausmacht.

7. Verfahren zur Herstellung eines Snackstücks nach Anspruch 1 aus Teigstücken, wobei das Verfahren folgende Schritte umfasst:
a) Formen des Teigstücks zu einer einheitlichen Größe, Rundung und Form;
b) Halten des Teigstücks an wenigstens einer Seite des Teigstücks, um die Rundung des Teigstücks zu bewahren und
c) Kochen des Teigstücks zu einem fertigen Snackstück.

8. Verfahren nach Anspruch 7, wobei das Teigstück durch Anbringen des Teigstücks auf einem gerundeten Band gehalten wird, wobei das Band einen Rundungsradius aufweist, der im Wesentlichen gleich einem gewünschten Rundungsradius des Snackstücks ist.

## Revendications

1. Pièce d'en-cas en forme de chips triangulaire uniforme ayant une zone de retenue de sauce pour contenir un condiment en sauce, et une zone de préhension indépendante de la zone de retenue de sauce, ladite pièce d'en-cas ayant une dimension et une forme permettant un agencement emboîté d'une pluralité desdites pièces d'en-cas alignées le long d'un axe d'emboîtement unique qui s'étend sur un angle constant en regard de la face avant de chaque pièce d'en-cas, ladite chips ayant une forme formée en prenant un segment d'une forme source tridimensionnelle, la forme bidimensionnelle de la chips étant triangulaire, ladite pièce d'en-cas comprenant un corps courbé autour d'un premier axe, ladite courbure dudit corps formant une zone de retenue de sauce ayant une extrémité ouverte, et dans laquelle ledit premier axe n'est pas parallèle à un côté dudit corps, moyennant quoi ledit corps courbé empêche une sauce contenue sur ladite pièce d'en-cas de s'écouler hors de ladite pièce d'en-cas dans au moins deux directions.

2. Pièce d'en-cas selon la revendication 1, dans laquelle ledit premier axe est perpendiculaire à ladite extrémité ouverte.

3. Pièce d'en-cas selon la revendication 1, dans laquelle ladite pièce d'en-cas a une longueur (L) de 30 mm à 110 mm.

4. Pièce d'en-cas selon la revendication 1, dans laquelle ladite courbure de ladite pièce d'encas a un rayon de courbure qui varie le long de la longueur de ladite pièce d'en-cas.

5. Pièce d'en-cas selon la revendication 1, dans laquelle ladite pièce d'en-cas est disposée en un agencement emboîté avec une pluralité de ladite pièce d'en-cas.

6. Pièce d'en-cas selon la revendication 1, dans laquelle ladite extrémité ouverte a une largeur de 15 mm à 75 mm et ladite extrémité resserrée présente moins de 75 % de la largeur de ladite extrémité ouverte.

7. Procédé de fabrication d'une pièce d'en-cas selon la revendication 1 à partir de pièces de pâte, ledit procédé comprenant les étapes de:
a) former ladite pièce de pâte en une dimension, courbure et forme uniformes;
b) contraindre ladite pièce de pâte sur au moins un côté de ladite pièce de pâte pour conserver ladite courbure de la pièce de pâte; et
c) cuire ladite pièce de pâte jusqu'à obtenir la pièce d'en-cas finie.

8. Procédé selon la revendication 7, dans lequel ladite pièce de pâte est contrainte en disposant ladite pièce de pâte sur une courroie courbée, dans lequel ladite courroie a un rayon de courbure sensiblement équivalent à un rayon de courbure souhaité de ladite pièce d'en-cas.
